# EUROPÄISCHE PATENTSCHRIFT

(11) **EP 1 341 664 B1**
(45) Veröffentlichungstag und Bekanntmachung des Hinweises auf die Patenterteilung: **23.11.2005**
(21) Anmeldenummer: 01994729.0
(22) Anmeldetag: 26.11.2001
(51) Int. Cl.: B29C 67/00, B22F 3/105

(54) **GENERATIVES VERFAHREN ZUR HERSTELLUNG EINES BAUTEILS SOWIE VORRICHTUNG ZUR DURCHFÜHRUNG DES VERFAHRENS**
METHOD FOR PRODUCING A PART AND DEVICE FOR CARRYING OUT THIS METHOD
PROCEDE DE PRODUCTION D'UN COMPOSANT ET DISPOSITIF CORRESPONDANT

(30) Priorität: 27.11.2000 DE 10058748
(43) Veröffentlichungstag der Anmeldung: 10.09.2003
(73) Patentinhaber: Innovaris GMBH, 85649 Brunnthal Nord (DE)
(72) Erfinder: DIRSCHERL, Markus, 81547 München (DE)
(74) Vertreter: Weber, Joachim
(86) Internationale Anmeldenummer: PCT/EP2001/013763
(87) Internationale Veröffentlichungsnummer: WO 2002/042056

(56) Entgegenhaltungen:
- US-A- 5 301 415

## Beschreibung

Die Erfindung betrifft ein Verfahren zur Herstellung eines Bauteils sowie eine Vorrichtung zur Durchführung des Verfahrens. Insbesondere betrifft die Erfindung ein generatives Fertigungsverfahren zur Herstellung von metallischen oder Verbund-Bauteilen.

In den vergangenen Jahren wurden viele verschiedene generative Verfahren zur direkten oder indirekten Herstellung von meist nichtmetallischen Bauteilen entwickelt und teilweise kommerzialisiert.

Da bei der direkten Herstellung von metallischen Bauteilen bis jetzt noch nicht der nötige Fortschritt erzielt wurde, werden metallische Bauteile, insbesondere mit komplizierten Geometrien auch heute noch meist in schon lange bekannten indirekten Verfahren, wie z. B. Fein- oder Sandguss hergestellt.

Das am meisten verbreitete Verfahren zur direkten Fertigung von metallischen Bauteilen ist Fräsen. Durch die großen Geschwindigkeitssteigerungen, die das Hochgeschwindigkeitsfräsen (HSC) brachte, wurde bereits versucht, diese Technologie mit anderen Verfahren zu kombinieren.

Aufgrund der häufig langen Prozessketten bei indirekten Verfahren (z. B. Feinguss) besteht der Bedarf an Verfahren zur direkten Herstellung von Metallbautellen. Ferner besteht ein großer Bedarf an flexiblen Verfahren zur schnellen, direkten Herstellung von Metallbauteilen in Serienmaterial. Dem stehen heute jedoch noch häufig Problematiken bei generativen Fertigungsverfahren entgegen, z. B. störender Stufeneffekt, poröse Bauteile, kleiner Bauraum, schlechte Oberflächenqualität, ungenügende Genauigkeit, Erfordernis einer mechanischen Nachbearbeitung, Spannungen und Verzug, eingeschränkte Verwendung von Serienmaterial, nur bedingte Erzeugung von Hinterschneidungen, keine lokale Verwendung unterschiedlicher Baumaterialien, ungenügende Materialeigenschaften, nur bedingte Erzeugung von Funktionsbauteilen, usw.

Bekannte direkte Verfahren zur Herstellung metallischer Gegenstände sind z. B.:
- Laser-Generieren mit Draht: Dabei erfolgt der Materialauftrag durch Metalldrähte, die mittels eines Lasers örtlich aufgeschmolzen werden. Dieses Verfahren zählt zu den Verfahren des Auftragsschweißens. Das Bauteil wird dabei zeilen- und schichtweise aufgebaut, z. B. Controlled Metal Build Up (CMB).
- Laser-Generieren mit Pulver: Dabei erfolgt der Materialauftrag durch Metallpulver, das mittels eines Lasers örtlich aufgeschmolzen wird. Das Bauteil wird dabei zeilen- und schichtweise aufgebaut, z. B. Laser Engineering Net Shaping (LENS) oder Direkt Light Fabrication (DLF).
- Lasersintern im Pulverbett: Dabei werden dicht nebeneinander liegende Partikel mit Hilfe eines Laserstrahls verschmolzen. Abhängig von der Art des Pulvers bzw. Pulvergemisches gibt es verschiedene Varianten. Das Versintern von Einkomponenten-Metallpulver wird z. B. als Direct Metal Laser Sintering (DMLS) oder Laser Power Remelting (SLPR) bezeichnet. Beim Versintern von Mehrkomponenten-Metallpolymerpulver wird ein polymerumhülltes Metallpulver verwendet. Dabei werden die Polymerhüllen aufgeschmolzen, um die Partikel zu einem Grünteil zu verbinden. In einem Folgeprozess muss der Polymeranteil ausgetrieben und das Bauteil infiltriert werden. Beim Versintern von Mehrkomponenten-Metall-Metallpulver wird ein.Gemisch aus niedrigschmelzendem und hochschmelzendem Metallpulver verwendet.
- Schicht-Laminat-Verfahren: Dabei werden Folien als Baumaterial verwendet, die verklebt oder verlötet werden, z. B. DE 197 29 770 C1, Layer Milling Prozess (LMP), Laminated Objekt Manufactering (LOM).
- 3D-Druckverfahren: Dabei wird Metallpulver mit Binder bedruckt. Das so hergestellte Bauteil muss anschließend entbindert und mit Metall infiltriert werden, z. B. Three-dimensional Printing (3DP).
- Micro-Casting Deposition: Dabei werden mit Hilfe von Masken Schichten durch thermisches Spritzen aufgebracht, z. B. Micro-Casting Deposition (MD).

Weiterhin sind Kombinationen von auftragenden und abtragenden Verfahren bekannt (vgl. z. B. EP 554 033 B1). Ein weiterer Ansatz besteht darin, die Bauteile zu segmentieren und konventionell zu fräsen, z. B. Stratified Object Manufactering (SOM) oder DE 197 27 934 A1.

In der US 53 01 415 ist ein Verfahren zur Herstellung eines Bauteils mit folgenden Schritten beschrieben:
a) Aufbringen einer ersten aus einem Stützmaterial bestehenden flächigen Schicht auf eine Bauplattform,
b) Einbringen mindestens einer Aussparung in das Stützmaterial,
c) Ausfüllen der Aussparung mit einem Baumaterial,
d) Aufbringen einer weiteren Schicht aus Stützmaterial,
e) Wiederholen der Schritte b) bis d) bis zur Fertigstellung des Bauteils und
f) Entfernen des Stützmaterials.

Bei (fast) allen bekannten Verfahren, insbesondere bei der Verwendung von rotierenden Werkzeugen, wirkt sich (je nach Geometrie) der Werkzeugdurchmesser auf die Bauteilgeometrie aus, indem nicht die gewünschte Geometrie, sondern eine Geometrie mit Radien entsteht. Selbst bei Verfahren, bei denen die Kontur mittels eines Lasers erzeugt wird, entsteht keine scharfe Kante, da meist der Laserstrahl Rotationssymmetrie aufweist und die Einflusszone (z. B. der Schmelzbereich) größer ist als der Strahl. Selbst bei Verfahren wie z. B. dem 3D-Drucken muss der Tropfenradius in Kauf genommen werden.

Es ist daher Aufgabe der vorliegenden Erfindung, ein Verfahren zur Herstellung eines Bauteils und eine Vorrichtung anzugeben, welche die Vorteile des schichtweisen Aufbaus (Rapid Prototyping) mit den Vorteilen einer spanenden Bearbeitung (z. B. Hochgeschwindigkeitsfräsen) vereinen und insbesondere die Erzeugung scharfkantiger Konturen ermöglichen.

Diese Aufgabe wird hinsichtlich des Verfahrens durch die Merkmale des Anspruchs 1 und hinsichtlich der Vorrichtung durch die Merkmale des Anspruchs 11 gelöst.

Das erfindungsgemäße Verfahren nach Anspruch 1 hat gegenüber den herkömmlichen Fertigungsmethoden eine Reihe von Vorteilen. Bei der Bearbeitung des Stützmaterials wird eine Art "Schichtform" geschaffen. Die Schichtform kann so ausgestaltet sein, dass eine Nacharbeit ggf. entfallen kann. Diese spanabhebende Bearbeitung des Stützmaterials anstelle des Baumaterials lässt eine einfachere und schnellere Zerspanung zu. Der Werkzeugverschleiß ist geringer. Es lassen sich auch kleinere Werkzeugdurchmesser verwenden. Falls das Baumaterial z. B. aufgrund einer hohen Härte schwer oder nicht zerspanbar ist, kann das Problem durch eine Formgebung durch das Stützmaterial beseitigt werden.

Durch eine Kombination von Stützmaterial-Bearbeitung und Baumaterial-Bearbeitung sind scharfkantige Konturen realisierbar.

D.h., um scharfkantige Ecken zu erzeugen, ist nunmehr erfindungsgemäß vorgesehen, dass die in das Stützmaterial eingebrachte Aussparung zumindest bereichsweise größer ist als die Kontur des gewünschten Bauteils und somit das Bauteil mit Aufmaß umgibt. Das Aufmaß wird sodann in einem nachfolgenden Bearbeitungsschritt entfernt, so dass scharfkantige Ecken resultieren, was ohne Aufbringen eines Aufmaßes nicht möglich wäre.

Da größere Fräsdurchmesser einsetzbar sind, ist auch eine Zeitersparnis möglich.

Bei Bauteilen mit konventionell hohem Zerspanungsgrad muss weniger Volumen zerspant werden.

Das Einebnen der Oberfläche kann vorzugsweise durch Fräsen mit Grobwerkzeugen erfolgen. Dies erlaubt eine schnelle Zerspanung. Das Einebnen ist wichtig, um eine definierte Ausgangsfläche für die nächste Schicht zu erzeugen oder um die Oberflächengüte und die Maßhaltigkeit zu gewährleisten, falls diese Fläche oder Teile davon die Oberfläche des herzustellenden Gegenstandes darstellt. Das Einebnen der Oberfläche kann auch durch andere mechanische Verfahren, chemische oder physikalische Abtragung erfolgen.

Durch eine geringe Schichtdicke kann bevorzugt eine Trockenbearbeitung mit gasförmigen Medien zur Spanentfernung, Reinigung und Kühlung erfolgen. Auf die Verwendung von flüssigen Kühl- und Schmierstoffen sollte verzichtet werden, so dass diese vor dem Auftragen der nächsten Schicht auch nicht wieder entfernt werden müssen.

Das erfindungsgemäße Verfahren erlaubt es, alle Arten von Metallen, Legierungen, aber auch andere Stoffe (z. B. Keramiken) in beliebiger Reihenfolge mittels einer einzigen vorrichtungsgemäßen Anlage aufzutragen und damit unterschiedlichste Eigenschaften innerhalb eines Baukörpers zu erzeugen. Durch den Einsatz unterschiedlicher Materialien mit unterschiedlichen Eigenschaften lassen sich z. B. Lagerbuchsen mit beliebiger Geometrie form- oder stoffschlüssig in Gehäuse integrieren sowie z. B. durch intelligente Prozessführung poröse Bereiche z. B. für die Schmierstoffaufnahme ähnlich wie bei Sintermaterialien herstellen.

Dazu kann es notwendig sein, die Oberfläche, auf welche die nächste Schicht aufgebracht wird, zu aktivieren. Dies kann z. B. durch Strahlen, Laseraufrauhen oder chemische Verfahren innerhalb einer einzigen vorrichtungsgemäßen Anlage geschehen. Das erfindungsgemäße Verfahren und die zugehörige Vorrichtung erlauben es, konstante oder variable Schichtstärken, abhängig von der Geometrie, dem Auftragsverfahren, dem Wärmeverhalten, den vorgegebenen Toleranzen usw. innerhalb eines Bauteils zu realisieren.

Auch lassen sich Aussparungen wie z. B. Taschen oder Bohrungen erzeugen, auch über mehrere Schichten, um Einbauteile oder Einlegeteile einbringen zu können, welche mit der Grundstruktur fest oder lose verbunden sind.

Durch eine definierte Erwärmung und Abkühlung sind gezielt Eigenschaften wie z. B. Porosität, Materialgefüge, Härte auch lokal einstellbar.

Das erfindungsgemäße Verfahren und die zugehörige Vorrichtung erlauben für Sonderanwendungen das Herstellen von Hohlkörpern oder doppelwandigen Körpern oder z. B. die Integration von Strukturen wie z. B. Kühlkanälen. Auch sind bewegliche Funktionsteile erzeugbar z. B. durch einen dünnen Spalt bei der Herstellung oder durch Materialkombinationen, die sich nicht verbinden oder durch Spaltbildung aufgrund definiertem Schwund eines Materials.

Als Stützmaterial können bevorzugt sowohl Keramik (z. B. Polymerkeramik), Gips oder (niedrigschmelzende) Metalle und Legierungen verwendet werden. Das Stützmaterial kann sowohl durch Spritzen oder Drucken aufgebracht werden. Natürlich sind auch andere Materialien und bekannte Verfahren möglich.

Bevorzugt werden Stützmaterialien, die (wasser)löslich und (dünn)flüssig sind. Sie sollten nach ihrer Verfestigung wieder (wasser)löslich sein. Vorteilhaft wären auch Materialien, die schnell abbindend bzw. erstarrend sind. Sie sollten auch wärmebeständig sein. Wünschenswert wäre auch ein möglichst geringer Schwund bzw. eine möglichst geringe Wärmeausdehnung. Die Löslichkeit kann z. B. auch durch Laugen oder andere Medien erfolgen.

Das Stützmaterial kann durch verschiedene Auftragsverfahren aufgebracht werden. Diese Auftragsverfahren können in verschiedene Gruppen unterteilt werden:
1. Flächig aufbringen und anschließender Herstellung der benötigten Aussparungen z. B. a.) flächig aufspritzen und Aussparung(en) fräsen oder b.) Schicht, z. B. Keramikpartikel, aufbringen, Binder an den Stellen aufbringen an denen keine Aussparung benötigt wird und anschließend ungebundene Partikel absaugen. (Die Kontur kann ggf. auch zusätzlich noch nacharbeitet werden).
2. Bereiche aufbringen und anschließende Nachbearbeitung der benötigten Aussparungen, z. B. Bereiche aufspritzen und Aussparung(en) fräsen.
3. Stützmaterial definiert aufbringen ohne Nachbearbeitung der benötigten Kontur/Aussparung, z. B. Schicht definiert mit Dosiersystemen, z. B. Drop-on-demand Druckkopf, aufbringen.
4. Stützmaterial definiert aufbringen und Nachbearbeitung der benötigten Kontur/Aussparung, z. B. Schicht definiert mit Dosiersystemen, z. B. Drop-on-demand Druckkopf, aufbringen und durch Fräsen nacharbeiten.

Die Aussparungen werden größer um ein Aufmaß für eine Nacharbeit vorzusehen. Dieses Maß mit dem Aufmaß ist hier jedoch unabhängig von der Geometrie der Wände bzw. Nacharbeit zu sehen.
In allen Fällen kann die Kontur so aufgebracht und/oder nachgearbeitet werden, dass entweder senkrechte Wände/Stufen entstehen oder die Kontur (Wände) zur Minimierung des Stufeneffektes der gewünschten Kontur (Wände) angenähert wird oder eine andere Geometrie, die aufgrund des Auftrags-/Nacharbeitsverfahren entsteht oder leicht herzustellen ist. Eine Überarbeitung der Schichten in der Höhe kann bei allen Varianten bei Bedarf jederzeit durchgeführt werden.

Die Form und Anzahl der Aussparungen ist abhängig von der Geometrie des Bauteils und kann natürlich auch z. B. Inseln enthalten. Falls mehrere Bauteile gleichzeitig (z. B. nebeneinander) gefertigt werden, fallen diese Aussparungen analog für jedes Bauteil an.

Das als Substrat bezeichnete Teil kann auch Bestandteil des herzustellenden Gegenstandes sein. In diesem Fall wird dieses (zumindest vorerst nicht) vom schichtweise gebauten Bauteil getrennt. Auf die Zwischenschichten aus Stützmaterial kann ggf. in diesem Sonderfall verzichtet werden.

Das Baumaterial (Pulver) wird mit einer Vorrichtung in die hergestellten Aussparungen eingefüllt. Dazu sind verschiedene Auftragsverfahren verwendbar. Einige der möglichen Auftragsverfahren werden nun kurz dargestellt.

Ein Beispiel für ein Auftragsverfahren ist das seit langem bekannte Verfahren des thermischen Spritzens. Unter thermisches Spritzen fallen z. B. das Flamm- und Lichtbogenspritzen, das Plasmaspritzen, das Hochgeschwindigkeitsflammspritzen, das Detonationsspritzen und das Laserspritzen. Beim thermischen Spritzen wird der Spritzwerkstoff in einer Pistole durch eine Flamme, ein Plasma oder einen Lichtbogen vollständig oder teilweise aufgeschmolzen und mit hoher Geschwindigkeit aus der Pistole geschleudert. Die nacheinander auftreffenden Partikel bilden unter Einschluss von Poren eine lamellenartige Schicht. Die Haftung der Spritzpartikel beruht auf mechanischer Verklammerung, auf Adhäsion sowie auf chemischen und metallurgischen Wechselwirkungen. Mechanische Verklammerung leisten in der Regel den größten Beitrag zur Haftung. Durch eine anschließende Verschmelzung der neuen Schicht in sich und mit der darunter liegenden Schicht Baumaterial, z. B. mit Hilfe eines Lasers, kann das Problem der Haftung durch eine schmelzmetallurgische Verbindung gelöst werden. Ein Problem beim thermischen Spritzen mit hohen Temperaturen stellt die Oxidbildung des Baumaterials dar. Da der Einsatz von Schutzgas (z. B. Argon) als Zerstäubergas in den benötigten Mengen meist unwirtschaftlich ist, muss ein gewisser Oxidgehalt im Baumaterial in Kauf genommen werden.

Eine Weiterentwicklung des Hochgeschwindigkeitsflammspritzen stellt das Kaltgasspritzen dar. Dieses Verfahren wird z. B. in EP 484 533 B1 beschrieben. Beim Kaltgasspritzen wird als Zusatzwerkstoff Pulver verwendet. Die Pulverpartikel werden beim Kaltgasspritzen jedoch nicht im Gasstrahl geschmolzen, da die Temperatur des Gasstrahl meist unter der Temperatur des Schmelzpunktes der Pulverpartikel liegt.

Ein weiteres Auftragsverfahren stellt die Gruppe des Auftragsschweißens dar. Da hierbei kein Zerstäubergas benötigt wird, kann unter einer Inertgasatmosphäre zur Vermeidend von Oxidbildung gearbeitet werden. Die Energie zum Schmelzen bzw. Schweißen kann z. B. durch einen Laser oder einen Lichtbogen eingebracht werden. Das Baumaterial kann z. B. in Form von Pulver, Stäben oder von der Rolle zugeführt werden.

Insbesondere in Verbindung mit den Merkmalen des Anspruchs 8 ergibt sich ein Verfahren, das gegenüber bekannten Sinterverfahren eine Reihe von Vorteilen besitzt.

Beim konventionellen selektiven Lasersintern im Pulverbett besteht das Problem, dass benachbarte Partikel ungewollt mit aufgeschmolzen bzw. angeschmolzen werden. Dadurch wird die Oberflächengüte und Maßhaltigkeit mit in Leidenschaft gezogen. Bei dem neuen Verfahren existieren keine benachbarten Partikel. Somit kann auch kein benachbartes Pulver mit angebacken werden. Ferner besteht die Möglichkeit, die Oberfläche am Baumaterial nachzuarbeiten. (Dadurch ergibt sich eine bessere Oberflächengüte und eine bessere Maßhaltigkeit).

Beim konventionellen selektiven Lasersintern im Pulverbett besteht weiterhin das Problem, dass die Schichtstärke und die Bauteilgeometrie den Stufeneffekt bestimmt. Bei dem neuen Verfahren kann entweder das Stützmaterial an die ideale Geometrie des Bauteils angenähert werden oder das Bauteil durch Nacharbeit der Oberfläche an die ideale Geometrie des Bauteils angenähert werden. (Dadurch ergibt sich eine Minimierung des Stufeneffekts, eine besser Oberflächengüte und eine bessere Maßhaltigkeit).

Beim konventionellen selektiven Lasersintern im Pulverbett besteht das Problem, dass der Energieeintrag exakt gesteuert werden muss, um das Anbacken der umliegenden Partikel möglichst zu beschränken. Bei dem neuen Verfahren existieren keine benachbarten Partikel. Somit kann auch kein benachbartes Pulver mit angebacken werden. Der Prozess kann durch Erhöhung des Energieeintrags beschleunigt werden. (Dadurch besteht die Möglichkeit einer Erhöhung der Geschwindigkeit und eine unproblematischere Steuerung des Energieeintrags).

Beim konventionellen selektiven Lasersintern im Pulverbett besteht auch das Problem, dass einerseits genug Energie eingebracht werden muss, um das Pulver aufzuschmelzen, andererseits darf nicht zuviel Energie eingebracht werden darf, um das Anbacken der umliegenden Partikel möglichst zu vermeiden. Häufig wird deshalb in Kauf genommen, dass das Pulver zumindest teilweise nur angeschmolzen wird. Bei dem neuen Verfahren existieren keine benachbarten Partikel. Somit kann auch bei höherem Energieeintrag kein benachbartes Pulver mit angebacken werden. Durch das unproblematische Aufschmelzen der Partikel kann ein Bauteil mit der Dichte und den Eigenschaften, wie sie in den Werkstoffspezifikationen angegeben sind, hergestellt werden. (Dadurch besteht die Möglichkeit, 100 % dichte Bauteile (keine Porosität) und Bauteile mit besseren Materialeigenschaften herzustellen).

Beim konventionellen selektiven Lasersintern im Pulverbett besteht das Problem, dass teilweise keine scharfen Kanten hergestellt werden können. Bei dem neuen Verfahren können die scharfen Kanten zumindest teilweise bereits im Stützmaterial vorgesehen werden oder durch eine mögliche Nacharbeit am Baumaterial realisiert werden. (Beim neuen Verfahren besteht die Möglichkeit scharfe Kanten zu realisieren).

Beim konventionellen selektiven Lasersintern im Pulverbett besteht das Problem, dass keine Einlegeteile realisierbar sind. (Beim neuen Verfahren besteht die Möglichkeit Einlegeteile zu integrieren).

Beim konventionellen selektiven Lasersintern im Pulverbett besteht das Problem, dass keine Kombination verschiedener Materialien realisierbar ist, ohne das Pulver mit dem anderen zu verunreinigen. (Beim neuen Verfahren besteht die Möglichkeit verschiedene Materialien auch innerhalb einer Schicht zu kombinieren).

Um Fehlstellen (z. B. durch Oxidation) im Bauteil zu vermeiden, kann z. B. unter Schutzgasatmosphäre/Inertgas oder im Vakuum gearbeitet werden.

Das Aufschmelzen des Pulvers kann allgemein durch Energiezufuhr, z. B. durch elektromagnetische Strahlung, erfolgen. Bevorzugt wird ein Laser eingesetzt.

Bestimmte Scanstrategien sind sinnvoll bzw. notwendig, um gewünschte Bauteil- und Materialeigenschaften zu erzielen. (z.B. Überlappen der Spuren, um eine höhere Dichte (geringerer Porenanteil) zu erhalten).

Das erfindungsgemäße Fertigungsverfahren ist eine Kombination aus auftragenden mit abtragenden Fertigungsverfahren und umfasst folgende Prozessschritte:
1. Bauteil am Computer mit einem 3D-CAD-System konstruieren oder digitalisieren
2. 3D-Zeichnung/Daten numerisch in Schichten zerlegen (z. B. 0,25 mm)
3. Aufbereitete Daten in die Maschine einlesen

Die Schritte 1 und 3 entsprechen dabei den heute üblichen Vorbereitungen für eine CNC-Fertigung bzw. Fertigung mit generativen Anlagen. Der Schritt 2 ist für einen schichtweisen Aufbau notwendig. Im Prinzip ist dies ebenfalls, allerdings in wesentlich gröberen Schritten, aus der segmentierten Fertigung mit konventionellem Fräsen (z. B. DE 197 27 934 A1) bekannt. Wenn man die vorbereitenden Schritte berücksichtigt, so beginnt das in seiner Gesamtheit dargestellte Verfahren eigentlich mit dem 4. Schritt.
4. Stützmaterial (z. B. anorganische oder organische Substanzen, niedrigschmelzende Legierung) auf Bauplattform aufbringen (z. B. durch Spritzen). Bei Bedarf vorher die Oberfläche der Bauplattform aktivieren.
5. Nachdem das Stützmaterial verfestigt ist (z. B. durch abbinden, abkühlen) nächste Schicht Stützmaterial aufbringen.
6. Schritt 5 so oft wiederholen, bis eine ausreichende Höhe erhalten ist, um das Bauteil später von der Plattform entfernen zu können bzw. thermisch zu isolieren.
7. Oberfläche einebnen (z. B. durch Fräsen).
8. Schicht Stützmaterial falls möglich in einem Zug aufbringen (z. B. durch Spritzen oder Drucken).
9. Nachdem das Stützmaterial verfestigt ist (z. B. durch abbinden, abkühlen) Aussparung im Stützmaterial für Baumaterial (z. B. durch Fräsen) herstellen. Falls aufgrund der Geometrie Hinterschneidungen im Stützmaterial erforderlich wären, senkrechte Wände an diesen Stellen erzeugen. Alle anderen Wände möglichst der Endgeometrie anpassen (Minimierung des Stufeneffektes) oder ggf. ein Aufmaß zur Endgeometrie vorsehen. Falls scharfe Kanten am Baumaterial notwendig sind, Aussparung entsprechend der Bearbeitungszugabe größer herstellen.
10. Bei Bedarf Oberfläche einebnen und/oder aktivieren.
11. Baumaterial (Pulver) aufbringen (z. B. durch thermisches Spritzen, Kaltgasspritzen, Auftragsschweißverfahren).
12. Falls bedingt durch das Auftragsverfahren z. B. keine schmelzmetallurgische Verbindung in sich und/oder zum Untergrund besteht oder die Schicht porös oder rissig ist, durch Energiequelle (z. B. elektromagnetische Strahlung, vorzugsweise Laserstrahl) neue Schicht in sich und gegebenenfalls mit der darunter liegenden Schicht verschmelzen bzw. verschweißen.
13. Bei Bedarf Oberfläche der Schicht einebnen (z. B. durch Fräsen).
14. Falls scharfe Kanten am Baumaterial erzeugt werden sollen oder zuvor ein Aufmaß berücksichtigt wurde, jetzt (z. B. durch Fräsen) herstellen bzw. fertig bearbeiten.
15. Bei Bedarf die Hinterschneidungen, die je nach Geometrie im Stützmaterial entstanden wären, jetzt oder gleichzeitig mit Schritt 14 am Baumaterial (z. B. durch Fräsen) entfernen. (Durch die senkrechten Wände wurde mehr Material aufgetragen als benötigt. Dieses wird jetzt entfernt).
16. Schritte 7 bis 15 wiederholen bis Bauteil Gesamthöhe erreicht hat. Wurden durch Bearbeitungen (z. B. Hinterschneidungen, scharfe Kanten, Aufmaß) Fehlstellen im Stützmaterial erzeugt, so werden mit dem Aufbringen des Stützmaterials für die nächste Schicht auch diese Fehlstellen mit gefüllt.
17. Bauteil mit Stützmaterial von der Bauplattform trennen.
18. Block aus der Maschine nehmen.
19. Stützmaterial entfernen, um Bauteil freizulegen (z. B. durch Auflösen, Schmelzen, mechanisches Abtragen).

Falls zwei oder mehr verschiedene Baumaterialien je Schicht verwendet werden sollen, muss das zweite und jede folgende wie das erste Baumaterial in die Schicht eingebracht werden. Dazu muss gegebenenfalls ein Teil des bereits aufgetragenen Baumaterials oder Stützmaterials wieder entfernt werden, um Platz zu schaffen für das weitere Baumaterial.

Falls das Bauteil eine höhere Oberflächengüte aufweisen soll (als es mit der Trennung zum Stützmaterial herstellbar ist) oder auch aus anderen Gründen, so wird die Aussparung im Stützmaterial entsprechend einer Bearbeitungszugabe größer erstellt. Nach dem Erhärten des Baumaterials wird dann in einem weiteren Schritt das Endmaß und die endgültige Oberfläche des Bauteils im Bereich der Schicht erzeugt. Dazu wird es notwendig sein, auch das Stützmaterial wieder teilweise zu entfernen.

Das Stützmaterial kann auch definiert aufgebracht werden, um eine Nacharbeit minimieren bzw. vermeiden zu können.

Um Konturen zu erarbeiten, werden vorzugsweise Fräser oder Schleifwerkzeuge verwendet. Ob man Formfräser verwendet oder Schrägen z. B. durch Schrägstellen des Werkzeuges erreicht, ist gleichbedeutend. Die vorwiegende Bearbeitung eines einfacher zu zerspanenden Stützmaterials anstelle von hochwertigem Baumaterial ergibt eine schnellere Zerspanbarkeit, einen geringeren Werkzeugverschleiß und die Möglichkeit, bei Bedarf kleinere Werkzeugdurchmesser zu verwenden. Durch die Kombination von Stützmaterial- und Baumaterialbearbeitung sind scharfkantige Konturen realisierbar. Verwendet man z. B. in diesem Fall größere Fräserdurchmesser, so ergeben sich Zeiteinsparungen bei jedem entsprechenden Vorgang.

Da die Zerspanung des Baumaterials auf ein Minimum reduziert werden kann, kann hochwertiges Baumaterial eingespart werden.

Abtragungsvorgänge können nicht nur mechanisch erfolgen, sondern sind auch mit chemischen oder physikalischen Methoden möglich.

Die Planbearbeitung jeder Schicht erfolgt vorzugsweise mit Grobwerkzeugen zur schnelleren Zerspanung. Wichtig dabei ist nur, eine definierte Schichtstärke und eine definierte Ausgangsfläche für den nächsten Schritt zu erhalten.

Zur automatischen Prozessüberwachung können bekannte Sensoren (z. B. optische oder thermische) verwendet werden. Sie müssen lediglich von solcher Art sein, dass sie die Prozesssicherheit und Toleranzeinhaltung gewährleisten.

Die Basis der Anlage besteht bevorzugt aus einer konventionellen 3-Achs-CNC-Fräsmaschine mit automatischem Werkzeugwechsler. Die Maschine ist erweitert mit Geräten zum Aufbringen und gegebenenfalls zum Bearbeiten des Stützmaterials und des Baumaterials. Zum Beispiel ist je nach Art der Baumaterialaufbringung ein Laser zum Verschmelzen der Schichten integriert. Alle wichtigen Zusatzeinrichtungen (außer Versorgungseinrichtungen) befinden sich innerhalb der voll verkapselten Verkleidung der Fräsmaschine.

Nachfolgend wird die Erfindung anhand von Ausführungsbeispielen näher beschrieben. Es zeigen:
- Figur 1: eine Schnittansicht, bei der gerade das Baumaterial in Form von Pulver aufgebracht wird;
- Figur 2: eine Schnittansicht, bei der das Baumaterial aufgebracht wurde;
- Figur 3: eine Schnittansicht, bei der gerade das Baumaterial mit einem Laser verschmolzen wird;
- Figur 4: eine Schnittansicht, bei der das Baumaterial verschmolzen wurde;
- Figur 5: eine Schnittansicht, bei der die oberste Schicht eingeebnet wurde;
- Figur 6: eine Schnittansicht eines herzustellenden Gegenstands;
- Figur 7: die Draufsicht des Substrates bzw. einer vorherigen Schicht;
- Figur 8: eine Schnittansicht von Figur 7;

- Figur 9: die Draufsicht eines weiteren Schrittes des Verfahrens, bei dem Stützmaterial auf das Substrat aufgebracht wurde.
- Figur 10: eine Schnittansicht von Figur 9;
- Figur 11: die Draufsicht eines weiteren Schrittes des Verfahrens, bei dem eine Aussparung im Stützmaterial erzeugt wurde;
- Figur 12: eine Schnittansicht von Figur 11;
- Figur 13: die Draufsicht eines weiteren Schrittes des Verfahrens, bei dem die Aussparung im Stützmaterial mit Baumaterial gefüllt wurde;
- Figur 14: eine Schnittansicht von Figur 13;
- Figur 15: die Draufsicht eines weiteren Schrittes des Verfahrens, bei dem eine scharfe Kante am Bauteil erzeugt wurde;
- Figur 16: eine Schnittansicht von Figur 15;
- Figur 17: die Draufsicht eines weiteren Schrittes des Verfahrens, bei dem eine neue Lage Stützmaterial aufgebracht wurde;
- Figur 18: eine Schnittansicht von Figur 17, bei der die neue Schicht Stützmaterial als eine schichtübergreifende Lage erkennbar ist;
- Figur 19: eine Schnittansicht eines herzustellenden Gegenstands;
- Figur 20: die Draufsicht des Substrates bzw. einer vorherigen Schicht;
- Figur 21: eine Schnittansicht von Figur 20;
- Figur 22: die Draufsicht eines weiteren Schrittes des Verfahrens, bei dem Stützmaterial auf das Substrat aufgebracht wurde;
- Figur 23: eine Schnittansicht von Figur 22;
- Figur 24: die Draufsicht eines weiteren Schrittes des Verfahrens, bei dem eine Aussparung im Stützmaterial erzeugt wurde;
- Figur 25: eine Schnittansicht von Figur 24;
- Figur 26: die Draufsicht eines weiteren Schrittes des Verfahrens, bei dem die Aussparung im Stützmaterial mit Baumaterial gefüllt wurde;
- Figur 27: eine Schnittansicht von Figur 26;
- Figur 28: die Draufsicht eines weiteren Schrittes des Verfahrens, bei dem das Aufmaß am Bauteil entfernt wurde;
- Figur 29: eine Schnittansicht von Figur 28;
- Figur 30: die Draufsicht eines weiteren Schrittes des Verfahrens, bei dem eine neue Lage Stützmaterial aufgebracht wurde; und
- Figur 31: eine Schnittansicht von Figur 30, bei der die neue Schicht Stützmaterial als eine schichtübergreifende Lage erkennbar ist.

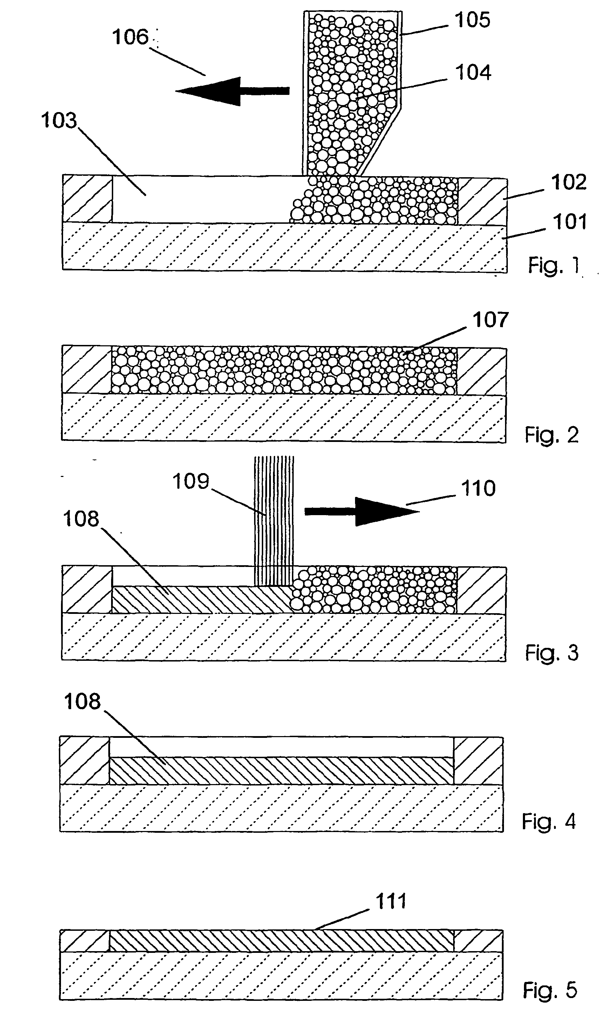

In den Figuren 1 bis 5 wird die Herstellung eines Bauteils 108 gemäß eines ersten bevorzugten Ausführungsbeispiels beschrieben. Auf ein Substrat 101 oder eine vorherige Schicht wird ein Stützmaterial 102 aufgebracht. Das Stützmaterial 102 kann entsprechend der Kontur des gewünschten Bauteils 108 definiert aufgebracht werden oder flächig mit anschließender Herstellung der benötigten Aussparungen 103. Die Aussparung 103 kann größer als die Kontur des gewünschten Bauteils 108 sein, falls eine Nacharbeit der Schicht am Baumaterial 107 durchgeführt werden soll. In einem weiteren Schritt wird die Aussparung 103 mit einem Baumaterial 107 aufgefüllt. Dazu wird ein Vorratsbehälter 105, der das Baumaterial 104 enthält, in Pfeilrichtung 106 über die im Stützmaterial 102 vorhandene Aussparung 103 geführt. In einem weiteren Schritt wird das Baumaterial 107 mit einem Laser 109, der sich z. B. in Pfeilrichtung 110 bewegt, in sich und ggf. mit der darunter liegenden Schicht verschmolzen (schmelzmetallurgisch verbunden). Falls bei dem Bauteil 108 ein Aufmaß vorgesehen wurde, kann dieses nun entfernt werden. In einem weiteren Schritt wird die gesamte Oberfläche 111 der Schicht eingeebnet, um eine definierte Schichthöhe zu erhalten. Die Schritte werden nun so oft wiederholt, bis das gewünschte Bauteil 108 fertig ist. Anschließend wird das Stützmaterial 102 entfernt, um das Bauteil 108 freizulegen.

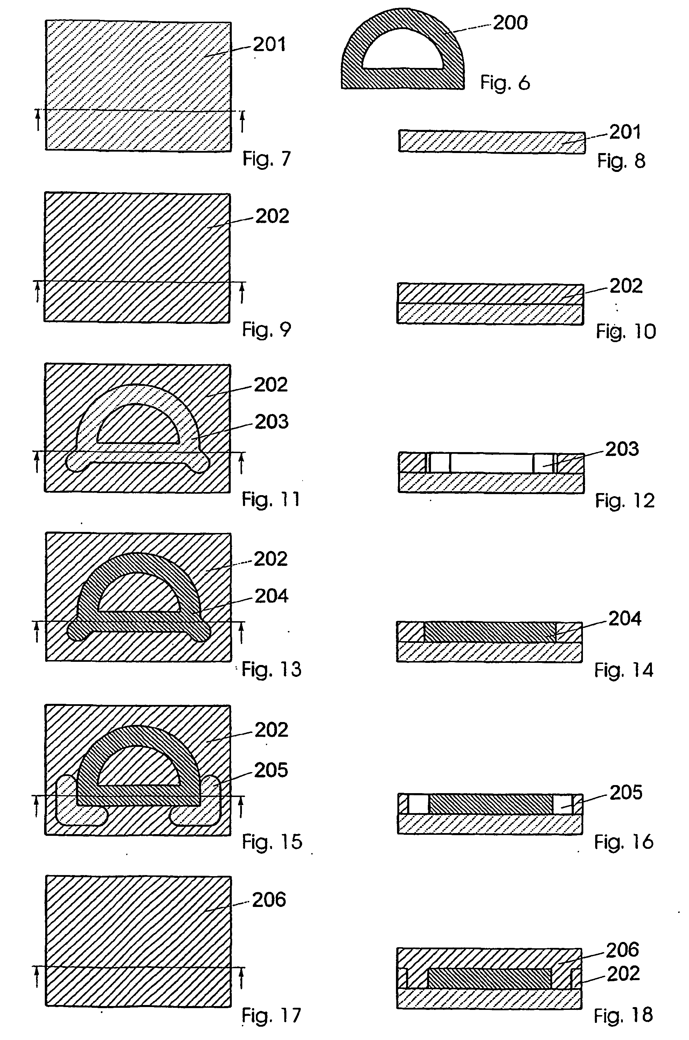

In einem weiteren bevorzugten Ausführungsbeispiel wird die Herstellung eines Bauteils 200 mit einer Aussparung beschrieben. In dieser Beschreibung wird insbesondere auf die Herstellung von scharfen Kanten bzw. kleinen Radien eingegangen. Hierbei wird auf die Figuren 6 bis 18 Bezug genommen. Auf ein Substrat 201 oder eine vorherige Schicht wird ein Stützmaterial 202 in einem Zug auf der gesamten Fläche aufgebracht. In einem weiteren Schritt wird eine Aussparung 203 in der soeben aufgebrachten Schicht erzeugt. Diese Aussparung 203 hat in bestimmten Bereichen die Kontur des gewünschten Bauteils 200. In anderen Bereichen wird nicht sofort die endgültige Kontur des Bauteils 200 erzeugt, wie beispielsweise bei einem bekannten Verfahren, sondern eine größere Aussparung erzeugt, so dass das Bauteil 200 an bestimmten Stellen ein Aufmaß aufweist. Diese größere Aussparung 203 wird benötigt, wenn der Radius des Zerspanungswerkzeuges größer ist als der erlaubte Radius am späteren Bauteil 200 bzw. wenn eine scharfe Kante benötigt wird. In einem weiteren Schritt wird die Aussparung 203 mit einem Baumaterial 204 aufgefüllt. In einem weiteren Schritt wird das Aufmaß am Baumaterial 204 entfernt und die gesamte Oberfläche der Schicht eingeebnet, um eine definierte Schichthöhe zu erhalten. Bei der Konturbearbeitung wird sowohl ein Teil des Baumaterials 204 wie auch ein Teil des Stützmaterials 202 entfernt. Durch diese Entfernung entsteht eine neue Aussparung 205 in der Schicht. In einem weiteren Schritt wird wieder Stützmaterial 206 aufgebracht. Bei der Aufbringung werden 2 Schichten 206 gleichzeitig erzeugt, da die Schicht 206 das Auffüllen der Aussparungen 205 (Fehlstellen der vorherigen Schicht) und den darüber liegenden Bereich betrifft. Die Schritte werden nun so oft wiederholt bis das gewünschte Bauteil 200 fertig ist. Danach wird der so gewonnene Block von der Bauplattform getrennt. Anschließend wird das Stützmaterial 202, 206 entfernt, um das Bauteil 200 freizulegen..

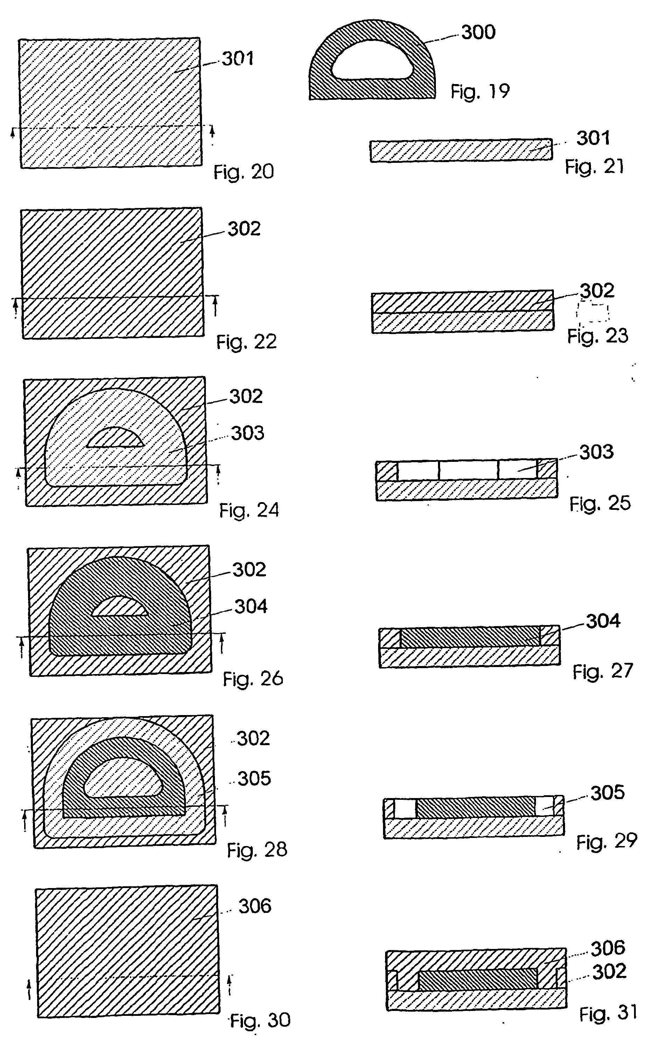

In einem weiteren bevorzugten Ausführungsbeispiel wird die Herstellung eines Bauteils 300 mit einer Aussparung beschrieben. Hierbei wird auf die Figuren 19 bis 31 Bezug genommen. Auf ein Substrat 301 oder eine vorherige Schicht wird ein Stützmaterial 302 in einem Zug auf der gesamten Fläche aufgebracht. In einem weiteren Schritt wird eine Aussparung 303 in höhe zu erhalten. Bei der Konturbearbeitung wird sowohl ein Teil des Baumaterials 304 wie auch ein Teil des Stützmaterials 302 entfernt. Durch diese Entfernung entsteht eine neue Aussparung 305 in der Schicht. In einem weiteren Schritt wird wieder Stützmaterial 306 aufgebracht. Bei der Aufbringung werden 2 Schichten 306 gleichzeitig erzeugt, da die Schicht 306 das Auffüllen der Aussparungen 305 (Fehlstellen der vorherigen Schicht) und den darüber liegenden Bereich betrifft. Die Schritte werden nun sooft wiederholt bis das gewünschte Bauteil 300 fertig ist. Danach wird der so gewonnene Block von der Bauplattform getrennt. Anschließend wird das Stützmaterial 302, 306 entfernt, um das Bauteil 300 freizulegen.

## Patentansprüche

1. Verfahren zur Herstellung eines Bauteils (108, 200, 300) mit folgenden Schritten:
a) Aufbringen einer ersten aus einem Stützmaterial (102, 202, 302) bestehenden flächigen Schicht auf eine Bauplattform (101, 201, 301),
b) Einbringen mindestens einer Aussparung (103, 203, 303) in das Stützmaterial (102, 202, 302), wobei die in das Stützmaterial (102, 202, 302) eingebrachte Aussparung (103, 203, 303) zumindest bereichsweise größer ist als die Kontur des gewünschten Bauteils (108, 200, 300) und somit das Bauteil (108, 200, 300) mit Aufmaß umgibt,
c) Ausfüllen der Aussparung (103, 203, 303) mit einem Baumaterial (104, 204, 304),
d) Aufbringen einer weiteren Schicht aus Stützmaterial (102, 202, 302),
e) Wiederholen der Schritte b) bis d) bis zur Fertigstellung des Bauteils (108, 200, 300) und
f) Entfernen des Stützmaterials (102, 202, 302).

2. Verfahren nach Anspruch 1, mit folgenden Verfahrensschritten:
a) Entfernen des Aufmaßes derart, dass sowohl ein Teil des Baumaterials (104, 204, 304) als auch ein Teil des Stützmaterials (102, 202, 302) entfernt wird und somit mindestens eine neue Aussparung (105, 205, 305) entsteht und
b) Aufbringen einer weiteren Schicht von Stützmaterial (106, 206, 306), wobei die weitere Schicht sowohl die neue Aussparung (105, 205, 305) ausfüllt als auch eine darüber liegende weitere Schicht bildet.

3. Verfahren nach einem der vorhergehenden Ansprüche, wobei die Bauplattform (101, 201, 301) wie folgt hergestellt wird:
a) Aufbringen einer ersten Schicht von Stützmaterial auf die gesamte benötigte Fläche einer Unterlage,
b) nach dem Verfestigen der ersten Schicht einebnen dieser Schicht und Aufbringen einer weiteren Schicht von Stützmaterial und
c) Wiederholen der Schritte a) und b) bis die Bauplattform (101, 201, 301) eine ausreichende Höhe erreicht hat, um das Bauteil (108, 200, 300) später von der Bauplattform (101, 201, 301) zu entfernen.

4. Verfahren nach einem der vorhergehenden Ansprüche, wobei von dem Aufbringen einer neuen Schicht ein Einebnen der Oberfläche der darunter liegenden Schicht erfolgt.

5. Verfahren nach einem der vorhergehenden Ansprüche, wobei die Oberfläche des Baumaterials (104, 204, 304) und/oder Stützmaterials (102, 202, 302) von dem Aufbringen der nächsten Schicht oder nächsten Materials aktiviert wird, z. B. durch Strahlen, Laseraufrauhen oder chemische Verfahren.

6. Verfahren nach einem der vorhergehenden Ansprüche, wobei zur Herstellung von Hinterschneidungen im Stützmaterial (102, 202, 302) an diesen Stellen vorerst senkrechte Wände erzeugt werden.

7. Verfahren nach einem der vorhergehenden Ansprüche, wobei jede neu aufgetragene Schicht in sich und mit der darunter liegenden Schicht durch Energiezufuhr verschmolzen wird.

8. Verfahren nach einem der vorhergehenden Ansprüche, wobei beim Einsatz von zwei oder mehr unterschiedlichen Baumaterialien für jedes Baumaterial (104, 204, 304) eine eigene Aussparung (103, 203, 303) hergestellt wird.

9. Verfahren nach einem der vorhergehenden Ansprüche, wobei am Baumaterial (104, 204, 304) das zuviel aufgebrachte Material entfernt wird.

10. Verfahren nach einem der vorhergehenden Ansprüche, wobei mehrere Bauteile (108, 200, 300) nebeneinander auf einer Bauplattform (101, 201, 301) erzeigt werden.

11. Vorrichtung zur Durchführung des Verfahrens nach Anspruch 1, mit einer mäterialabtragenden CNC-Fräsmaschine zum Einbringen mindestens einer Aussparung (103, 203, 303) in das Stützmaterial (102, 202, 302), wobei die in das Stützmaterial (102, 202, 302) eingebrachte Aussparung (103, 203, 303) zumindest bereichsweise größer ist als die Kontur des gewünschten Bauteils (108, 200, 300) und somit das Bauteil (108, 200, 300) mit Aufmaß umgibt, an der Auftragsvorrichtungen zum Aufbringen von Stütz- und Baumaterial (101, 202, 302, 104, 204, 304) vorgesehen sind.

12. Vorrichtung nach Anspruch 11, wobei an der Fräsmaschine mindestens ein Bearbeitungswerkzeug für das Baumaterial (104, 204, 304) und/oder Stützmaterial (102, 202, 204) vorgesehen ist.

13. Vorrichtung nach einem der Ansprüche 11 oder 12, wobei Sensoren zur Steuerung des Arbeitsablaufes vorgesehen sind.

14. Vorrichtung nach einem der Ansprüche 11 bis 13, wobei die Fräsmaschine eine vollverkapselte Verkleidung aufweist.

15. Vorrichtung nach einem der Ansprüche 11 bis 14, wobei an der Fräsmaschine vorgesehene Versorgungseinrichtungen außerhalb der Verkleidung angeordnet sind.

16. Vorrichtung nach einem der Ansprüche 11 bis 15, wobei das Bearbeitungswerkzeug ein Lasergerät ist.

## Claims

1. A method for producing a part (108, 200, 300) comprising the following steps:
a) applying a first flat layer consisting of a support material (102, 202, 302), to a construction platform (101, 201, 301),
b) introducing at least one recess (103, 203, 303) into said support material (102, 202, 302), wherein said recess (103, 203, 303) introduced into said support material (102, 202, 302) is larger at least in portions than the contour of the desired part (108, 200, 300) and thus surrounds said part (108, 200, 300) with an allowance,
c) filling said recess (103, 203, 303) with a construction material (104, 204, 304),
d) applying a further layer of support material (102, 202, 302),
e) repeating steps b) through d) until completion of said part (108, 200, 300) and
f) removing said support material (102, 202, 302).

2. The method according to claim 1, comprising the following steps:
a) removing said allowance such that both a part of said construction material (104, 204, 304) and a part of said support material (102, 202, 302.) are removed and at least one new recess (105, 205, 305) is thus created, and
b) applying a further layer of support material (106, 206, 306), said further layer filling both said new recess .(105, 205, 305) and forming a further layer positioned thereabove.

3. The method according to one of the preceding claims, wherein the construction platform ((101, 201, 301) is produced as follows:
a) applying a first layer of support material to the whole required surface of a substrate,
b) following the solidification of said first layer, leveling said layer and applying a further layer of support material, and
c) repeating steps a) and b) until said construction platform (101, 201, 301) has reached an adequate height to remove said part (108, 200, 300) from said construction platform (101, 201, 301) at a later time.

4. The method according to one of the preceding claims, wherein prior to the application of a new layer the surface of the layer positioned thereunder is leveled.

5. The method according to one of the preceding claims, wherein the surface of said construction material (104, 204, 304) and/or support material (102, 202, 302) is activated prior to the application of the next layer or next material, e. g. by abrasive blasting, laser roughening or chemical processes.

6. The method according to one of the preceding claims, wherein for the production of undercuts in said support material (102, 202, 302) vertical walls are first produced at said places.

7. The method according to one of the preceding claims, wherein each of the newly applied layers is molten in itself and with the layer positioned thereunder by the supply of energy.

8. The method according to one of the preceding claims, wherein when two or more different construction materials are used, a separate recess (103, 203, 303) is produced for each construction material (104, 204, 304).

9. The method according to one of the preceding claims, wherein the material applied in excess is removed on said construction material (104, 204, 304).

10. The method according to one of the preceding claims, wherein a plurality of parts (108, 200, 300) are produced side by side on a construction platform (101, 201, 301).

11. A device for carrying out the method according to claim 1, comprising a material-removing CNC milling machine for introducing at least one recess (103, 203, 303) into said support material (102, 202, 302), wherein said recess (103, 203, 303) introduced into said support material (102, 202, 302) is larger at least in portions than the contour of the desired part (108, 200, 300) and thus surrounds said part (108, 200, 300) with an allowance, on which application devices are provided for applying support and construction material (101, 202, 302, 104, 204, 304).

12. The device according to claim 11, wherein at least one machining tool for said construction material (104, 204, 304) and/or support material (102, 202, 204) is provided on said milling machine.

13. The device according to claim 11 or 12, wherein sensors are provided for controlling the operational sequence.

14. The device according to one of claims 11 to 13, wherein said milling machine comprises a fully encapsulated cladding.

15. The device according to one of claims 11 to 14, wherein supply means which are provided on said milling machine are arranged outside said cladding.

16. The device according to one of claims 11 to 15, wherein said machining tool is a laser device.

## Revendications

1. Procédé de fabrication d'une pièce de construction (108, 200, 300) comportant les étapes suivantes :
a) application sur une plate-forme de support (101, 201, 301) d'une première couche réalisée dans un matériau stabilisateur (102, 202, 302),
b) réalisation d'au moins un évidement (103, 203, 303) dans le matériau stabilisateur (102, 202, 302), l'évidement (103, 203, 303) ménagé dans le matériau stabilisateur (102, 202, 302) étant, au moins par zones, plus grand que le contour de la pièce (108, 200, 300) souhaitée et entourant donc la pièce (108, 200, 300) avec une surdimension,
c) remplissage de l'évidement (103, 203, 303) avec un matériau de construction (104, 204, 304),
d) application d'une couche supplémentaire en matériau stabilisateur (102, 202, 302),
e) répétition des étapes b) à d) jusqu'à la finition de la pièce (108, 200, 300) et
f) retrait du matériau stabilisateur (102, 202, 302).

2. Procédé selon la revendication 1, comportant les étapes suivantes :
a) suppression de la surdimension de manière à enlever non seulement une partie du matériau de construction (104, 204, 304), mais aussi une partie du matériau stabilisateur (102, 202, 302) et à former ainsi au moins un nouvel évidement (105, 205, 305) et
b) application d'une couche supplémentaire de matériau stabilisateur (106, 206, 306), la couche supplémentaire remplissant non seulement le nouvel évidement (105, 205, 305), mais formant aussi une couche supplémentaire superposée,

3. Procédé selon l'une quelconque des revendications précédentes, dans lequel la plate-forme de support (101, 201, 301) est réalisée de la manière suivante :
a) application d'une première couche de matériau stabilisateur sur la totalité de la surface nécessaire pour une base,
b) après le durcissement de la première couche, aplanissement de cette couche et application d'une couche supplémentaire de matériau stabilisateur, et
c) répétition des étapes a) et b) jusqu'à ce que la plate-forme de support (101, 201, 301) ait atteint une hauteur suffisante pour retirer ultérieurement la pièce (108, 200, 300) de la plate-forme de support (101, 201. 301).

4. Procédé selon l'une quelconque des revendications précédentes, dans lequel, avant l'application d'une nouvelle couche, on effectue un aplanissement de la surface de la couche sous-jacente.

5. Procédé selon l'une quelconque des revendications précédentes, dans lequel la surface du matériau de construction (104, 204, 304) et/ou du matériau stabilisateur (102, 202, 302) est activée, par exemple par grenaillage, grattage au laser ou un procédé chimique, avant l'application de la couche suivante ou du matériau suivant.

6. Procédé selon l'une quelconque des revendications précédentes, dans lequel, pour la réalisation de contre-dépouilles dans le matériau stabilisateur (102, 202, 302), des parois verticales sont réalisées au préalable à ces emplacements.

7. Procédé selon l'une quelconque des revendications précédentes, dans lequel chaque nouvelle couche appliquée est amalgamée en elle-même et avec la couche sous-jacente sous l'effet d'un apport d'énergie.

8. Procédé selon l'une quelconque des revendications précédentes, dans lequel, en cas d'utilisation de deux ou plusieurs matériaux de construction différents, un évidement (103, 203, 303) est réalisé en propre pour chaque matériau de construction (104, 204, 304).

9. Procédé selon l'une quelconque des revendications précédentes, dans lequel la matière déposée en excédent est éliminée sur le matériau de construction (104, 204, 304).

10. Procédé selon l'une quelconque des revendications précédentes, dans lequel plusieurs pièces (108, 200, 300) sont fabriquées les unes à côté des autres sur une plate-forme de support (101, 201, 301).

11. Dispositif destiné à la mise en oeuvre du procédé selon la revendication 1, comportant une fraiseuse CNC travaillant par enlèvement de matière, destinée à réaliser au moins un évidement (103, 203, 303) dans le matériau stabilisateur (102, 202, 302), l'évidement (103, 203, 303) ménagé dans le matériau stabilisateur (102, 202, 302) étant, au moins par zones, plus grand que le contour de la pièce (108, 200, 300) souhaitée et entourant donc la pièce (108, 200, 300) avec une surdirnension, et sur lequel dispositif sont prévus des dispositifs d'application destinés à déposer le matériau stabilisateur et le matériau de construction (102, 202, 302, 104, 204, 304).

12. Dispositif selon la revendication 11, dans lequel il est prévu sur la fraiseuse au moins un outil d'usinage pour le matériau de construction (104, 204, 304) et/ou le matériau stabilisateur (102, 202, 204).

13. Dispositif selon la revendicatiorl 11 ou 12, dans lequel des capteurs sont prévus pour la commande du processus de travail.

14. Dispositif selon l'une quelconque des revendications 11 à 13, dans lequel la fraiseuse comporte un chemisage entièrement blindé.

15. Dispositif selon l'une quelconque des revendications 11 à 14, dans lequel des dispositifs d'alimentation prévus sur la fraiseuse sont agencés en dehors du chemisage.

16. Dispositif selon l'une quelconque des revendications 11 à 15, dans lequel-l'outil d'usinage est un dispositif à laser,
